Europäisches Patentamt

European Patent Office

Office européen des brevets

(19)

(11) Veröffentlichungsnummer : **0 424 776 B1**

(12) **EUROPÄISCHE PATENTSCHRIFT**

(45) Veröffentlichungstag der Patentschrift :
**12.05.93 Patentblatt 93/19**

(51) Int. Cl.$^5$ : **C01G 55/00**

(21) Anmeldenummer : **90119729.3**

(22) Anmeldetag : **15.10.90**

(54) **Verfahren zur Gewinnung von Rutheniumtextroxid durch Oxidation von wässrigen Lösungen von Alkaliruthenaten.**

(30) Priorität : **27.10.89 DE 3935798**

(43) Veröffentlichungstag der Anmeldung :
**02.05.91 Patentblatt 91/18**

(45) Bekanntmachung des Hinweises auf die Patenterteilung :
**12.05.93 Patentblatt 93/19**

(84) Benannte Vertragsstaaten :
**BE CH DE FR GB LI NL**

(56) Entgegenhaltungen :
**US-A- 4 642 134**
**PATENT ABSTRACTS OF JAPAN, Band 13, Nr. 145 (C-583)[3493], 10. April 1989; & JP-A-63 307 103 (HITACHI LTD) 14-12-1988**

(56) Entgegenhaltungen :
**CHEMICAL ABSTRACTS, Band 94, Nr. 22, Juni 1981, Seite 684, Zusammenfassung Nr. 184680s, Columbus, Ohio, US; R. LOESSBERG et al.: "Method for synthesizing of anhydrous ruthenium (VIII) oxide", & Z. NATURFORSCH., B: ANORG. CHEM. ORG. CHEM. 1981, 36B(3), 395**
**CHEMICAL ABSTRACTS, Band 104, Nr. 22, Juni 1986, Seite 166, Zusammenfassung Nr. 189243m, Columbus, Ohio, US; & JP-A-61 06 130 (TANAKA NOBLE METAL INDUSTRIAL CO., LTD) 11-01-1986**

(73) Patentinhaber : **BASF Aktiengesellschaft Carl-Bosch-Strasse 38 W-6700 Ludwigshafen (DE)**

(72) Erfinder : **Schuster, Ludwig, Dr. Weinheimer Strasse 44 W-6703 Limburgerhof (DE)**
Erfinder : **Voges, Dieter, Dr. Speyerer Strasse 113 W-6800 Mannheim 1 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Ruthenium ist häufig Bestandteil von Katalysatoren. Auch Ruthenium-Verbindungen kommen hierfür in Betracht, z.B. insbesondere $RuO_2$, das bekanntlich Bestandteil des elektrokatalytischen Überzuges von dimensionsstabilen Anoden (DSA) ist.

Dementsprechend besteht häufig die Notwendigkeit das Ruthenium, bzw. Rutheniumverbindungen aus den gebrauchten Katalysatoren bzw. Elektroden herauszulösen und in Form von verwertbaren Verbindungen des Rutheniums wiederzugewinnen.

In dem tschechoslowakischen Urheberschein 211 980 ist ein solches Verfahren beschrieben. Bei diesem Verfahren wird zunächst das Ruthenium mit alkalischen Lösungen von Alkalihypochloriten als Natriumruthenat in Lösung gebracht. Das Natriumruthenat wird anschließend mit elementarem Chlor zu Rutheniumtetroxid oxidiert und letzteres durch Umsetzung mit Salzsäure zu Ruthenium-IV-chlorid umgesetzt.

Diesem Verfahren liegen folgende Reaktionsgleichungen zugrunde:

$$Ru + 3\ NaOCl + 2\ NaOH \rightarrow Na_2RuO_4 + 3\ NaCl + H_2O$$
$$Na_2RuO_4 + Cl_2 \rightarrow RuO_4 + 2\ NaCl$$
$$RuO_4 + 8\ HCl \rightarrow RuCl_4 + 4\ H_2O + 2\ Cl_2$$

Ein Nachteil dieses Verfahrens ist der große Chlorverbrauch, da dieses Gas nicht nur als Oxidationsmittel, sondern auch als Trägergas dient. Eine andere Schwierigkeit liegt darin begründet, daß die Durchführng der Reaktion in der zweiten Stufe praktisch nicht reproduzierbar verläuft. Durch das Einleiten des Chlors in die stark alkalische Lösung des Natriumruthenates disproportioniert ein Teil des eingeleiteten Chlors unter Bildung von Natriumchlorid und Natriumhypochlorit, welches wiederum zu Sauerstoff und Natriumchlorid zerfällt. Durch diese Nebenreaktion verschiebt sich der pH-Wert der Lösung vom alkalischen Bereich weg. Unter diesen Reaktionsbedingungen sind das Natriumruthenat und das intermediär auftretende Natriumperruthenat nicht mehr beständig, sondern zerfallen in nicht näher bekannten Disproportionierungsreaktionen zu schwarzen Niederschlägen von Rutheniumoxiden, die sich durch Chlor nicht weiter oxidieren lassen. Diese störenden Reaktionen treten nach einem undurchsichtigen Schema so häufig auf, daß die Oxidation des Natriumruthenates in das Tetroxid nicht reproduzierbar ist.

Der vorliegenden Erfindung lag daher die Aufgabe zugrunde, ein Verfahren zur Gewinnung von Rutheniumtetroxid durch Oxidation von wäßrigen Lösungen von Alkaliruthenat bereitzustellen, das die Nachteile der bekannten Verfahren nicht aufweist.

Es wurde gefunden, daß diese Aufgabe dadurch gelöst werden kann, daß man die Oxidation mit Ozon bei pH-Werten oberhalb von 8 durchführt.

Bei dem erfindungsgemäßen Verfahren geht man von wäßrigen Lösungen von Alkaliruthenaten, z.B. Natriumruthenat aus, die in bekannter Weise z.B. durch Oxidation von metallischem Ruthenium mit Natriumhypochlorit in stark alkalischer Lösung gewonnen werden. Die Lösungen können Alkaliruthenat bis zur Sättigungsgrenze enthalten. Nach unten ist der Konzentration keine Grenze gesetzt, da die Umsetzung quantitativ verläuft. Technisch ist es jedoch vorteilhaft, bei Konzentrationen von 50 bis 150 g/Liter Lösung zu arbeiten. Erfindungsgemäß wird für die Oxidation Ozon bzw. ozonhaltige Gase eingesetzt, wie sie z.B. bei der stillen elektrischen Entladung in einer Sauerstoffatmosphäre in einem Ozonisator entstehen. Solche ozonhaltigen Gase enthalten neben Sauerstoff 1 bis 6 Vol.-% Ozon.

Zur Oxidation des Alkaliruthenats werden die ozonhaltigen Gase in die wäßrige Lösung des Alkaliruthenates eingeleitet. Es ist zweckmäßig, die Oxidation in stark alkalischem Bereich, d.h. bei pH-Werten $\geqq$ 12 zu beginnen und bei Nachlassen der Entwicklung von Rutheniumtetroxid, den pH-wert durch langsame und vorsichtige Zugabe von Säuren, z.B. Salzsäure unter Vermeidung einer lokalen Ansäuerung auf 8-9 abzusenken.

Die Umsetzung kann bei Temperaturen von 0 bis 100°C durchgeführt werden. Das gebildete Rutheniumtetroxid kann aus dem Gasstrom durch Kühlung auf Temperaturen $\leqq$ 30°C abgeschieden und weiterverarbeitet werden.

Arbeitet man bei Temperaturen unterhalb des Schmelzpunktes von Rutheniumtetroxid (27°C), so ist es zweckmäßig, das Reaktionsgemisch zwecks der Austreibung des Rutheniumtetroxids auf Temperaturen von 80 - 100°C zu erwärmen.

Beispiel

Die Reaktionsapparatur besteht aus einem Kolben mit einem Fassungsvermögen von einem Liter. Dieser ist mit einem Rührer, einem Thermometer, einer Glaselektrode zur pH-Messung, einem Einleitrohr, einem Tropftrichter und einer Destillationsbrücke ausgestattet. Die Vorlage des Destillationsaufsatzes besteht aus einem Erlemeyerkolben von 250 ml Inhalt. Dessen Inhalt wird durch ein Magnetrührstäbchen gerührt. Alle Schliffverbindungen bestehen aus nicht gefetteten, sorgfältig gereinigten Glasschliffen.

In den Rührkolben gibt man 10,8 g (0,106 Mol) fein verteiltes Ruthenium und 8,5 g (0,212 Mol) Natriumhydroxid in 20 ml Wasser. Unter Kühlung mit Eis fügt man dann langsam unter Rühren 134 g einer Bleichlauge hinzu, die 0,265 Mol Natriumhypochlorit (19,7 g) enthält. Die Temperatur wird hierbei bei 5 bis 10°C gehalten. Man rührt ca. 15 min nach, bis weitgehende Auflösung eingetreten ist. In die entstandene wäßrige Lösung von Natriumruthenat (12,8 Gew.-

% Na$_2$O$_4$) leitet man nun 50 l/h eines Sauerstoff-Ozon-Gemisches ein, das 240 g Ozon pro Nm$^3$ enthält.

Nach 15 min nach Beginn der Ozoneinleitung erwärmt man im Verlauf von einer Stunde auf 100°C. Hierbei beginnt bald Rutheniumtetroxid zu entweichen. Wenn die Tetroxidentwicklung nachläßt, wird durch langsame Zugabe von konzentrierter Salzsäure kontinuierlich der pH von 14 bis zu einem Wert von 8-9 abgesenkt. Hierbei geht das gesamte Ruthenium als gelbes, wachsartiges Tetroxid über, das durch Kühlung aus dem Gasstrom abgeschieden wird.

**Patentansprüche**

1.  Verfahren zur Gewinnung von Rutheniumtetroxid durch Oxidation von Alkaliruthenat in wäßrigen Lösungen, dadurch gekennzeichnet, daß man die Oxidation mit Ozon bei pH-Werten oberhalb von 8 durchführt.

2.  Verfahren nach Anspruch 1, dadurch gekennzeichnet, daß man zu Beginn der Oxidation einen pH-Wert von $\geqq$ 12 einhält und diesen bis zur Beendigung der Oxidation auf 8-9 absenkt.

3.  Verfahren nach Ansprüchen 1 bis 2, dadurch gekennzeichnet, daß man das Verfahren bei Temperaturen von 0 bis 100°C durchführt.

**Claims**

1.  A process for obtaining ruthenium tetroxide by oxidation of alkali metal ruthenate in aqueous solutions, wherein the oxidation is carried out with ozone at pH values above 8.

2.  A process as claimed in claim 1, wherein a pH of $\geqq$ 12 is maintained at the start of the oxidation and is lowered to 8-9 by the end of the oxidation.

3.  A process as claimed in claims 1 to 2, wherein the process is carried out at from 0 to 100°C.

**Revendications**

1.  Procédé d'obtention de tétroxyde de ruthénium par oxydation de ruthénates alcalins en solutions aqueuses, caractérisé en ce qu'on effectue l'oxydation avec de l'ozone à des pH au-dessus de 8.

2.  Procédé selon la revendication 1, caractérisé en ce qu'on établit un pH $\geqq$ 12 au début de l'oxydation et on abaisse celui-ci à 8-9 jusqu'à la fin de l'oxydation.

3.  Procédé selon la revendication 1 ou 2, caractérisé en ce qu'on met en oeuvre le procédé à des températures de 0 à 100°C.